Europäisches Patentamt

European Patent Office

Office européen des brevets

(11) Publication number: **0 001 184**
**B1**

## EUROPEAN PATENT SPECIFICATION

(45) Date of publication of patent specification: **06.01.82**

(51) Int. Cl.³: **B 21 C  3/02,** **C 04 B  37/00**

(21) Application number: **78300368.4**

(22) Date of filing: **11.09.78**

(54) Wire drawing die composites.

(30) Priority: **14.09.77 ZA  775521**

(43) Date of publication of application:
**21.03.79 Bulletin 79/6**

(45) Publication of the grant of the European patent:
**06.01.82 Bulletin 82/1**

(84) Designated Contracting States:
**BE CH DE FR GB NL SE**

(56) References cited:
**BE - A - 621 795**
**FR - A - 1 576 033**
**FR - A - 2 285 213**
**GB - A - 1 162 098**
**US - A - 3 831 428**
**US - A - 4 000 026**

(73) Proprietor: **DE BEERS INDUSTRIAL DIAMOND DIVISION (PROPRIETARY) LIMITED**
**8th Floor 45 Main Street**
**Johannesburg Transvaal (ZA)**

(72) Inventor: **Dietrich, Rainer**
**101-6th Street**
**Linden Transvaal (ZA)**

(74) Representative: **Jones, Alan John et al,**
**CARPMAELS & RANSFORD 43 Bloomsbury Square**
**London, WC1A 2RA (GB)**

Courier Press, Leamington Spa, England.

## Wire drawing die composites

This invention relates to wire drawing die composites and to wire drawing die blanks.

U.S. Patent No. 3,831,428 describes wire drawing dies comprising a diamond or cubic boron nitride compact having a centrally-located double-tapered hole extending therethrough and surrounded by a metal bonded carbide support. The compact is directly bonded to the carbide surround without the interposition of any bonding layer therebetween, the interface between the compact and the carbide surround being free of voids and being irregular and interlocking on the scale of 1—100 micrometers.

U.S. Patent No. 4,063,909 describes abrasive bodies comprising diamond and cubic boron nitride compacts bonded to a metal bonded carbide support by means of a high temperature braze metal layer. Bonding may be achieved by bonding the high temperature braze metal to the support using a low temperature braze metal such as bronze. Particularly preferred high temperature braze metals are titanium and titanium alloys, but other transition metals are disclosed including tantalum.

U.S. Patent No. 4,108,614 describes abrasive bodies similar to those of U.S. Patent No. 4,063,909, but wherein the bonding layer is zirconium. The achievement of the strong bond using zirconium was found to be very much less sensitive to variations in manufacturing conditions compared with, for example, titanium bonding layers.

According to this invention there is provided a wire drawing die blank comprising a diamond or cubic boron nitride abrasive compact and a mass of metal bonded carbide surrounding the compact to provide it with symmetrical support, characterised in that the carbide mass is bonded to the abrasive compact by a layer of tantalum or an alloy containing tantalum, and in that no low temperature braze metal is used to assist said bond. The bonding layer will consist predominantly of tantalum. There will always be some alloying of the bonding layer with both the metal of the carbide surround and the metal of the compact, when the compact contains a metal.

The thickness of the layer will generally be in the range 0,01 mm to 0,25 mm. A typical thickness will be 0,125 mm.

The abrasive compacts are diamond or cubic boron nitride compacts. Such abrasive compacts are well known in the art and consist of a mass of the abrasive particles bonded into a hard conglomerate. In diamond compacts the abrasive particles are predominantly diamond while in cubic boron nitride compacts the abrasive particles are predominantly cubic boron nitride.

The abrasive particle content of compacts is at least 50 percent by volume and generally at least 70 percent by volume. Preferably the abrasive particle content is 80 to 90 percent by volume of the compact.

In the case of diamond compacts, there is preferably provided a metal matrix which is capable of acting as a solvent for diamond growth. Examples of suitable solvents are nickel, cobalt and iron and alloys containing one or more of these metals.

In the case of cubic boron nitride compacts, there is also preferably provided a metal matrix which is capable of acting as a solvent for cubic boron nitride growth. Examples of suitable solvents are aluminium and alloys of aluminium with nickel, cobalt, manganese, iron, vanadium or chromium.

Diamond and cubic boron nitride compacts are made under conditions of temperature and pressure at which the abrasive particles are crystallographically stable. Such compacts contain a high abrasive particle content and can replace large single crystals.

The metal bonded carbide may be tantalum carbide, titanium carbide, tungsten carbide or mixtures thereof, sintered into a hard mass with a metal bonding phase. Examples of suitable metals are cobalt, nickel, iron and alloys containing one or more of these metals.

The metal bonding phase is typically present in an amount of about 6 to 35 percent by weight. Metal bonded carbides are also called cemented carbides and sintered carbides.

It has been found that the tantalum or tantalum-alloy layer effectively bonds the compact to the carbide surround. Moreover, tantalum has surprisingly been found to produce good results more reproducibly than any other transition metal.

The invention further provides a wire drawing die composite comprising a blank as described above wherein the compact has a centrally-located hole extending therethrough. The hole is typically a double-tapered hole.

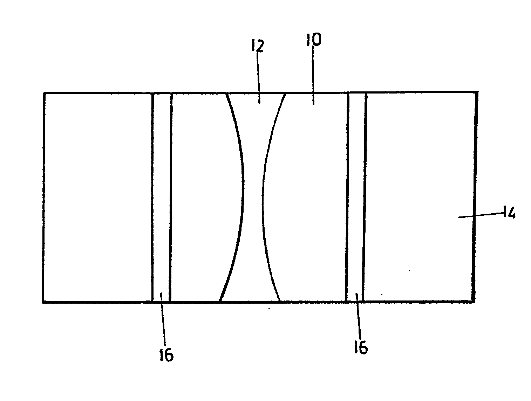

An embodiment of a wire-drawing die composite is illustrated by the attached drawing which is a sectional side elevation of the composite.

Referring to the drawing there is shown a compact 10 having a double-tapered hole 12 extending therethrough. The compact is surrounded by a metal carbide support 14 and bonded thereto by means of a tantalum bonding layer 16. As mentioned above the tantalum layer will alloy to some extent with the metal of the carbide support and the metal of the compact, if such is used.

The wire drawing die blanks of the invention are made using high temperature/pressure apparatus. The steps involved in this manufacture may be as follows:

(i) The following are placed in the reaction capsule of such apparatus:

(a) a metal bonded carbide support or a mixture of carbide and powdered metal bonding phase suitable for producing the carbide support;

(b) the tantalum or tantalum-alloy, in powder or foil form, inside and in contact with the carbide support or carbide mixture;

(c) the components necessary for producing the compact inside the tantalum or alloy layer.

(ii) The contents of the capsule are subjected to elevated temperature and pressure conditions at which the abrasive particles are crystallographically stable.

(iii) The elevated conditions of temperature and pressure are maintained for at least ten to fifteen minutes.

(iv) The temperature is allowed to return to ambient conditions.

(v) The pressure is released.

(vi) A composite is recovered from the reaction capsule.

The centrally located hole may be drilled or otherwise formed in the compact using known techniques. Alternatively, the hole can be formed by placing an appropriate metal wire in the compact-producing components at the time the reaction capsule is loaded. After recovery of the composite, the metal wire may be removed by dissolving it in a suitable acid to produce the hole.

The compact-producing components may be a mixture of a bonding matrix, in powdered form, and the abrasive particles or a foil of a bonding matrix placed inside and in contact with the metal bonding layer and a mass of the abrasive particles placed inside the matrix foil or a mass of abrasive particles sandwiched between foils of a bonding matrix.

Typical conditions of elevated temperature and pressure which are used are 1450° to 1600°C and 55 to 70 kilobars, respectively.

In an example of the invention, a wire drawing die composite was produced in the following manner. The reaction capsule of a conventional high temperature/pressure apparatus was loaded with the following: a cemented tungsten carbide preformed support; a tantalum foil inside and in contact with the support; a cobalt foil inside and in contact with the tantalum foil; a mass of diamond particles filling the space inside the cobalt foil.

The reaction capsule was then placed in the high temperature/pressure apparatus and the contents thereof exposed to a pressure of 55 kilobars and simultaneously a temperature of about 1500°C. These elevated conditions were maintained for 30 minutes.

The temperature was then allowed to return to ambient and the pressure released. Recovered from the capsule was a composite consisting of a diamond compact bonded to a surrounding cemented tungsten carbide support by means of a tantalum bonding layer. The tantalum bonding layer was, in effect, a tantalum/cobalt alloy layer because of the alloying which took place during manufacture. The layer had a thickness of about 0,125 mm. A centrally located double tapered hole was drilled in the diamond compact using conventional drilling techniques to produce a wire drawing die composite.

In use, the wire drawing die composite is mounted in a suitable metal binding ring in the usual way.

**Claims**

1. A wire drawing die blank comprising a diamond or cubic boron nitride abrasive compact (10) and a mass (14) of metal bonded carbide surrounding the compact (10) to provide it with symmetrical support, characterised in that the carbide mass (14) is bonded to the abrasive compact (10) by a layer (16) of tantalum or an alloy containing tantalum, and in that no low temperature braze metal is used to assist said bond.

2. A wire drawing die blank of Claim 1 wherein the thickness of the layer (16) is in the range 0.01 mm to 0.25 mm.

3. A wire drawing die composite comprising a blank according to either one of the preceding claims wherein the compact is provided with a centrally-located hole (12) extending therethrough.

4. A composite according to Claim 3 wherein the hole (12) is a double-tapered hole.

**Revendications**

1. Pièce centrale de filière d'étirage de fil comprenant une pièce abrasive (10) àu diamant ou au nitrure de bore cubique et une masse (14) de carbure à liant métallique entourant la pièce abrasive et la supportant symétriquement, caractérisée en ce que la masse de carbure (14) est reliée à la pièce abrasive (10) par une couche (16) de titane ou d'un alliage contenant du titane, et en ce qu'aucun métal de brasage à basse température n'est utilisé pour facilier cette liaison.

2. Pièce centrale de filière d'étirage de fil selon la revendication 1, caractérisée en ce que l'épaisseur de la couche de liaison intermédiaire (16) et de 0,01mm à 0,25mm.

3. Pièce centrale de filière d'étirage de fil selon l'une des revendications 1 et 2, caractérisée en ce que la pièce est traversée par un trou central (12).

4. Pièce centrale de filière d'étirage de fil selon la revendication 3, caractérisée en ce que le trou (12) est un trou à double conicité.

**Patentansprüche**

1. Drahtziehdüsenkörper, enthaltend einen Schleifkörper (10) auf Basis von Diamant oder kubischem Bornitrid und eine Masse (14) von metallgebundenem Carbid, die den Schleifkörper (10) umgibt, um ihm symmetrischen Halt zu geben, dadurch gekennzeichnet, daß die Carbidmasse (14) durch eine Schicht (16) aus Tantal oder einer Tantal enthaltenden Legierung an den Schleifkörper (10) gebunden ist, und daß kein Tieftemperatur-Hartlötmetall verwendet wird, um die Bindung zu unterstützen.

2. Drahtziehdüsenkörper nach Anspruch 1, worin die Dicke der Schicht (16) im Bereich von 0,01 mm bis 0,25 mm liegt.

3. Drahtziehdüsenbaugruppe, enthaltend einen Körper nach einem der vorstehenden Ansprüche, worin der Schleifkörper mit einem zentral liegenden Loch (12), das sich durch ihn erstreckt, versehen ist.

4. Baugruppe nach Anspruch 3, worin das Loch (12) ein Doppelkegelloch ist.